# EUROPÄISCHE PATENTSCHRIFT

(11) **EP 3 227 031 B1**
(45) Veröffentlichungstag und Bekanntmachung des Hinweises auf die Patenterteilung: **27.02.2019**
(21) Anmeldenummer: 15797858.6
(22) Anmeldetag: 23.11.2015
(51) Int. Cl.: B05B 15/18, B05B 12/00, B05B 12/08, B05B 1/04, B05C 11/10, B05C 5/02, B05B 13/04

(54) **APPLIKATIONSANLAGENBAUTEIL MIT TRANSPONDER UND VERSCHLEISSERKENNUNGSEINRICHTUNG**
APPLICATION TOOL WITH TRANSPONDER AND WEAR INDICATING MEANS
OUTIL D'APPLICATION MUNI D'UN TRANSPONDEUR ET D'UN INDICATEUR D'USURE

(30) Priorität: 03.12.2014 DE 102014017895
(43) Veröffentlichungstag der Anmeldung: 11.10.2017
(73) Patentinhaber: Dürr Systems AG, 74321 Bietigheim-Bissingen (DE)
(72) Erfinder: KRAFT, Bernd, 71711 Steinheim-Höpfigheim (DE); STIEGLER, Martin, 71717 Beilstein (DE); MARTIN, Herbert, 71384 Weinstadt (DE); RADEMACHER, Lothar, 74321 Bietigheim-Bissingen (DE); SCHWAGER, Werner, 71642 Ludwigsburg (DE)
(74) Vertreter: v. Bezold & Partner Patentanwälte - PartG mbB
(86) Internationale Anmeldenummer: PCT/EP2015/002354
(87) Internationale Veröffentlichungsnummer: WO 2016/087028

(56) Entgegenhaltungen:
- EP-A1- 2 839 885
- WO-A1-2008/022708
- WO-A1-2013/158184
- WO-A2-2005/075088
- DE-U1-202012 010 204
- US-A- 6 142 385

## Beschreibung

Die Erfindung betrifft ein Applikationsanlagenbauteil, vorzugsweise ein wechselbares Applikationsorgan, wie z. B. eine wechselbare Düse, das zum Applizieren eines Auftragsmaterials auf Werkstücke, wie z. B. Kraftfahrzeugkarosserien und/oder deren Anbauteile ausgebildet ist. Ferner betrifft die Erfindung ein Applikationssystem mit einer Lese- und/oder Schreibeinrichtung für das Bauteil betreffende Daten.
Applikationsanlagenbauteile, wie z. B. Düsen zur Applikation von Dichtmaterial, Glockenteller zur Rotationszerstäubung von Lack, aber auch zur Applikation erforderliche Pumpen und Antriebsmotoren, sind Verschleiß unterworfen. Das führt in der Praxis zu vielerlei Problemen. So können zu stark verschlissene Applikationsanlagenbauteile dazu führen, dass die Kraftfahrzeugkarosserien mit verschlechterter Qualität bearbeitet werden (z. B. schlechtere Lackierqualität, schlechtere oder ungenauere Dichtqualität, etc.). Deshalb müssen verschlissene Applikationsanlagenbauteile regelmäßig gewechselt werden, wozu Personal und Zeit erforderlich ist, was die Produktivität der Applikationsanlage verschlechtert. Außerdem birgt das Wechseln stets die Gefahr, dass z. B. aus Unachtsamkeit ein verschlissenes Applikationsanlagenbauteil durch ein falsches ersetzt wird. Ferner ist es ein Problem, dass der Verschleiß meist schleichend stattfindet und somit oftmals gar nicht sicher ist, ob das Applikationsanlagenbauteil tatsächlich übermäßig verschlissen ist oder nicht. Somit kommt es in der Praxis vor, dass Prüfungen erfolgen, ohne dass letztendlich ein übermäßig verschlissenes Applikationsanlagenbauteil vorliegt. Ein weiteres Problem ist, dass der Verschleiß der Applikationsanlagenbauteile oftmals im hundertstel-mm Bereich (1/100 mm Bereich) liegt, so dass ein genaues Erkennen des Verschleißes nur sehr schwer bis gar nicht möglich ist.

Dokument WO2008022708 A1 offenbart ein Heissleimauftragssystem und ein Verfahren zur Regelung und Überwachung des Heissleimauftragssystems, wobei Auftragsventile einen oder mehrere maschinenlesbare und vorzugsweise auch beschreibbare Datenträger enthalten.

Dokument DE202012010204U offenbart eine Düse für die Reinigung von Rohren und Kanälen, die eine Verschleißerkennung aufweist.

Eine Aufgabe der Erfindung ist es, eine Möglichkeit zu schaffen, mittels der die zuvor beschriebenen Probleme und Nachteile überwunden werden können.

Diese Aufgabe wird mit einem Applikationsanlagenbauteil gemäß Anspruch 1, einem Betriebsverfahren gemäß Anspruch 16 sowie einem Applikationssystem gemäß Anspruch 17 gelöst.

Die Erfindung schafft ein Applikationsanlagenbauteil, vorzugsweise ein wechselbares Applikationsorgan zum Applizieren eines Auftragsmittels auf Kraftfahrzeugkarosserien und/oder deren Anbauteile. Das Applikationsanlagenbauteil ist somit insbesondere ein Bauteil für eine Applikationsanlage.
Das Applikationsanlagenbauteil kann insbesondere eine wechselbare Düse sein, z. B zur Herstellung von Nahtabdichtungen, Bördelnahtabdichtungen, Schutzfilmen und/oder Sichtnähten an Kraftfahrzeugkarosserien und/oder zur Konservierung, insbesondere Hohlraumkonservierung, von Kraftfahrzeugkarosserien.

Das Applikationsanlagenbauteil kann alternativ oder ergänzend ein wechselbarer Glockenteller zum Applizieren von Lack auf das Werkstück sein.

Das Applikationsanlagenbauteil ist insbesondere ein Mediendurchströmbares und/oder Verschleiß-behaftetes Bauteil.
Das Applikationsanlagenbauteil zeichnet sich dadurch aus, dass es einen Transponder zum Speichern von Bauteildaten aufweist und die Bauteildaten zweckmäßig berührungslos auslesbar sind. Ergänzend zeichnet sich das Applikationsanlagenbauteil dadurch aus, dass es eine Verschleißerkennungseinrichtung zum Erkennen (z. B. Erfassen) eines Verschleißes des Applikationsanlagenbauteils aufweist.

Der Transponder und/oder die Bauteildaten werden genutzt, um das Applikationsanlagenbauteil eindeutig identifizieren und somit zweckmäßig von anderen Applikationsanlagenbauteilen unterscheiden zu können. Wenn das Applikationsanlagenbauteil eindeutig identifizierbar ist, können dem Applikationsanlagenbauteil insbesondere zusätzliche Bauteildaten (z. B. Betriebszeit, Applikationsmitteldurchsatz, etc.) zugeordnet werden, aus denen quasi indirekt Rückschlüsse auf den Verschleiß und/oder die Historie des Applikationsanlagenbauteils gezogen werden können. Der Transponder und/oder die Bauteildaten werden somit zweckmäßig genutzt, um quasi indirekt den Verschleiß des Applikationsanlagenbauteils zu ermitteln.
Die Verschleißerkennungseinrichtung ermöglicht ein schnelles und genaues Erkennen eines Verschleißes des Applikationsanlagenbauteils, zweckmäßig ein Erfassen, ob ein maximal zulässiger Verschleiß erreicht ist oder nicht. Dadurch können z. B. selbst schleichende Verschleißprozesse erkannt werden.
Es ist möglich, dass der Transponder mit Bauteildaten beschreibbar ist. Alternativ kann der Transponder so ausgeführt sein, dass er nur auslesbar, aber nicht beschreibbar ist. Der Transponder kann somit zur bidirektionalen oder zur eindirektionalen Übermittlung der Bauteildaten ausgeführt sein.

Erfindungsgemäß fassen die Bauteildaten Bauteil-Identifikationsdaten (z. B. eine Seriennummer) zur Identifikation des Applikationsanlagenbauteils um, so dass das Applikationsanlagenbauteil eindeutig identifizierbar ist und somit insbesondere von anderen Applikationsanlagenbauteilen unterscheidbar ist. Es ist sogar möglich, dass die Bauteildaten ausschließlich Bauteil-Identifikationsdaten sind.
Die Bauteildaten können außerdem Bauteil-Authentifikationsdaten zur Authentifikation des Applikationsanlagenbauteils umfassen, so dass das Applikationsanlagenbauteil authentifizierbar ist.
Es ist möglich, dass das Applikationsanlagenbauteil mit einer separaten Lese- und/oder Schreibeinrichtung zur Verfügung gestellt wird. Die Lese- und/oder Schreibeinrichtung dient zweckmäßig zum Lesen der Bauteildaten aus dem Transponder und/oder zum Beschreiben des Transponders mit Bauteildaten.
Die Lese- und/oder Schreibeinrichtung kann zur ortsfesten Montage in einer Applikationsanlage ausgeführt sein, während das Applikationsanlagenbauteil in den meisten Einsatzfällen zur Bewegung mittels eines Roboters ausgeführt ist. Der Roboter und die Lese- und/oder Schreibeinrichtung werden in der Applikationsanlage so angeordnet, dass der Transponder mittels des Roboters vor die Lese- und/oder Schreibeinrichtung positionierbar ist, um von der Lese- und/oder Schreibeinrichtung ausgelesen und/oder beschrieben werden zu können.

Es ist möglich, dass das Applikationsanlagenbauteil mit einem separaten Steuersystem zur Verfügung gestellt wird. Das Steuersystem ist mit der Lese- und/oder Schreibeinrichtung z. B. drahtlos oder drahtgebunden verbindbar, so dass Bauteildaten aus dem Transponder über die Lese- und/oder Schreibeinrichtung an das Steuersystem übermittelbar sind und/oder Bauteildaten aus dem Steuersystem über die Lese- und/oder Schreibeinrichtung an den Transponder übermittelbar sind.

Das Steuersystem kann zweckmäßig zum Steuern eines Betriebsprozesses des Applikationsanlagenbauteils und/oder zum Steuern des Manipulators zum Bewegen des Applikationsanlagenbauteils dienen.

So ist es zweckmäßig möglich, dass dem Steuersystem Bauteil-Identifikationsdaten übermittelbar sind und das Steuersystem ausgeführt ist, dem zugehörigen Applikationsanlagenbauteil zusätzliche Bauteildaten zuzuordnen (z. B. Betriebsdauer, verarbeitete Menge (z. B. Durchsatz) an Auftragsmittel, Startzeitpunkt und/oder Endzeitpunkt eines Betriebsvorgangs etc.).

Des Weiteren kann das Steuersystem ausgeführt sein, einem eindeutig identifizierbaren Applikationsanlagenbauteil zugeordnete Bauteildaten mit zweckmäßig hinterlegten, vordefinierten Daten zu vergleichen, z. B. mit Soll-, Grenz- und/oder Referenzwerten und alternativ oder ergänzend z. B. Authentifikationsdaten.

Im Rahmen der Erfindung ist es somit möglich, dass der Transponder (gegebenenfalls nur) Bauteil-Identifikationsdaten aufweist und die anderen Bauteildaten (z. B. Betriebsdauer, verarbeitete Menge (z. B. Durchsatz) an Auftragsmittel, Startzeitpunkt und/oder Endzeitpunkt eines Betriebsvorgangs, etc.) im Steuersystem hinterlegt werden und im Steuersystem verwertet werden (z. B. gespeichert, überwacht, verglichen und/oder geprüft, etc.).

Es ist möglich, dass das Steuersystem ausgeführt ist, eine Warnmeldung zu erzeugen und/oder einen zweckmäßig automatischen Applikationsanlagenbauteil-Wechselvorgang zu veranlassen, wenn mittels der Bauteildaten auf einen übermäßigen Verschleiß des Applikationsanlagenbauteils geschlossen wird.

Das Steuersystem kann außerdem ausgeführt sein, eine Warnmeldung zu erzeugen und/oder einen Bearbeitungsprozess zu stoppen, wenn mittels der Bauteildaten auf ein falsches Applikationsanlagenbauteil geschlossen wird.

Die Bauteildaten können zumindest eines von folgenden umfassen: die Betriebsdauer (z. B. die Einsatzzeit) des Applikationsanlagenbauteils, die mittels des Applikationsanlagenbauteils verarbeitete Menge (z. B. Durchsatz) an Auftragsmittel zum Applizieren auf das Werkstück, den Startzeitpunkt und/oder den Endzeitpunkt eines Betriebsvorgangs des Applikationsanlagenbauteils. Die letztgenannten Bauteildaten können vorzugsweise mittels des Steuersystems einem eindeutig identifizierbaren Applikationsanlagenbauteil zugeordnet werden, woraus insbesondere Rückschlüsse auf den Verschleiß oder allgemein auf die Historie des Applikationsanlagenbauteils gezogen werden können. Die Letztgenannten Bauteildaten sind vorzugsweise in dem Steuersystem hinterlegt, können alternativ oder ergänzend allerdings auch auf den Transponder geschrieben werden.

Der Transponder ist vorzugsweise eine RFID-Einrichtung (RFID: Radio-Frequency-Identification), insbesondere ein RFID-Transponder.

Der Transponder ist insbesondere ausgeführt, um elektronischbasiert ausgelesen werden zu können und/oder um elektronischbasiert beschrieben werden zu können.

Der Transponder ist zweckmäßig an oder in das Applikationsanlagenbauteil montiert.

Es ist möglich, dass das Applikationsanlagenbauteil einen Freiraum (z. B. eine Bohrung oder eine Aussparung) aufweist, in dem der Transponder aufgenommen ist, vorzugsweise so, dass er die Kompaktheit des Applikationsanlagenbauteils nicht beeinträchtigt, er nicht von der Außenfläche des Körpers des Applikationsanlagenbauteils absteht und/oder er bündig zur Außenfläche des Applikationsanlagenbauteils ausgeformt ist.

Der Transponder ist vorzugsweise so ausgeformt und in das Applikationsanlagenbauteil integriert, dass er die Silhouette und/oder Außen-Grundkontur des Applikationsanlagenbauteils nicht beeinträchtigt oder verändert.

Zu erwähnen ist, dass "Transponder" im Rahmen der Erfindung breit auszulegen ist und insbesondere Vorrichtungen zum Speichern von Bauteildaten umfasst, wobei die Bauteildaten berührungslos, drahtlos, per Funk, optisch und/oder per Infrarot-Technologie ausgelesen werden können, und optional ebenso darauf geschrieben werden können.

Zu erwähnen ist ferner, dass das Merkmal "Steuern" im Rahmen der Erfindung breit auszulegen ist und zweckmäßig ebenso ein "Regeln" umfassen kann.

Die Verschleißerkennungseinrichtung umfasst zumindest eine (z. B. kreisförmige, linienförmige, rechteckförmige, etc.) Verschleißmarke zweckmäßig benachbart zu einem Verschleißabschnitt des Applikationsanlagenbauteils, wodurch der Verschleiß insbesondere visuell und/oder optisch erkannt werden kann, z. B. durch einen Kontrolleur, eine Kamera oder ein anderes optisches Erkennungsinstrument.

Die zumindest eine Verschleißmarke ermöglicht insbesondere, den Verschleißprozess besser erkennen und nachverfolgen zu können.

Es ist möglich, dass die Verschleißerkennungseinrichtung zumindest eine ausgesparte Verschleißmarke (z. B. Bohrung, Ausnehmung, Nut, Loch, etc.) neben einem Verschleißabschnitt des Applikationsanlagenbauteils aufweist, so dass eine plötzliche, z. B. sprunghafte Betriebsänderung erfolgt, wenn der durch Verschleiß aufgeweitete Verschleißabschnitt mit der ausgesparten Verschleißmarke in Kontakt kommt. Alternativ oder ergänzend ist es möglich, dass die Verschleißerkennungseinrichtung zumindest eine mit Füllmaterial gefüllte Verschleißmarke (z. B Bohrung, Ausnehmung, Nut, Loch, etc.) zweckmäßig neben einem Verschleißabschnitt des Applikationsanlagenbauteils aufweist, so dass das Füllmaterial entweicht, wenn es mit dem durch Verschleiß aufgeweiteten Verschleißabschnitt in Kontakt kommt.

Erreicht der aufgeweitete Verschleißabschnitt die zweckmäßig ausgesparte Verschleißmarke, kommt es z. B. zu einem überproportionalen Auftragsmittelverbrauch und/oder einem abfallenden Applikationsdruck, woraus auf einen übermäßigen Verschleiß geschlossen werden kann.

Durch die zumindest eine ausgesparte und/oder mit Füllmaterial gefüllte Verschleißmarke kann insbesondere der Zeitpunkt des Erreichens eines maximal zulässigen Verschleißes quasi exakt erfasst werden.

Das Füllmaterial kann gegenüber dem Applikationsanlagenbauteil und/oder dem Auftragsmaterial andersfarbig sein, wodurch das Erreichen der Verschleißmarke(n) visuell und/oder optisch z. B. auf dem Applikationsanlagenbauteil und/oder dem Werkstück erkennbar ist.

Es ist möglich, dass das Füllmaterial flüssig, pulverförmig und/oder pastös ist.

Die Verschleißerkennungseinrichtung, insbesondere die Verschleißerkennungsmarke(n), ist vorzugsweise in den Körper des Applikationsanlagenbauteils erodiert, gebohrt, geschnitten und/oder gelasert (z. B. lasergraviert).

Das Applikationsanlagenbauteil ist vorzugsweise eine wechselbare Düse zum Applizieren eines Auftragsmittels auf Kraftfahrzeugkarosserien und/oder deren Anbauteile.

Die Düse ist vorzugsweise eine Flatstream-Düse und/oder eine Düse mit schlitzförmiger Düsenaustrittsöffnung. Die Düse kann aber auch andere Düsenaustrittsformen aufweisen.

Die Düse dient insbesondere zur Herstellung von Abdichtungen (z. B. Nahtabdichtungen und/oder Bördelnahtabdichtungen), Klebeverbindungen, Dämmelementen, Schutzfilmen und/oder Sichtnähten und zwar vorzugsweise an Kraftfahrzeugkarosserien und/oder deren Anbauteilen. Die Düse kann alternativ oder ergänzend zur Konservierung, insbesondere zur Hohlraumkonservierung von Kraftfahrzeugkarosserien dienen.

Die vorstehende Beschreibung bezieht sich auf ein einziges Applikationsanlagenbauteil. In der Regel werden in einer Applikationsanlage allerdings mehrere Applikationsanlagenbauteile (z. B. des gleichen Typs und/oder unterschiedlichen Typs) wie hierin beschrieben eingesetzt, so dass die Beschreibung ebenso entsprechend für mehrere Applikationsanlagenbauteile gilt.
Die Erfindung betrifft ferner ein Betriebsverfahren für ein Applikationsanlagenbauteil wie hierin offenbart. Das Betriebsverfahren bezieht sich auf die Ausführungsform "Transponder" und umfasst insbesondere den Schritt des Auslesens von Bauteildaten aus einem Transponder eines Applikationsanlagenbauteils, wobei die Bauteildaten zumindest Bauteil-Identifikationsdaten zur Identifikation des Applikationsanlagenbauteils umfassen, so dass das Applikationsanlagenbauteil eindeutig identifizierbar ist. Weitere Verfahrensschritte ergeben sich aus der Offenbarung zu dem Applikationsanlagenbauteil mit Transponder.
Die Erfindung umfasst darüber hinaus ein Applikationssystem zum Applizieren eines Auftragsmittels auf Kraftfahrzeugkarosserien und/oder deren Anbauteile, mit zumindest einem Applikationsanlagenbauteil wie hierin offenbart.
Das Applikationssystem umfasst in der Regel eine Vielzahl von Applikationsanlagenbauteilen. Es ist möglich, dass Applikationsanlagenbauteile Typen-gleich (z. B. gleiche Bauart, gleiche Baureihe, gleicher Einsatzzweck, etc.) sind und/oder Applikationsanalgenbauteile Typen-ungleich (z. B. unterschiedliche Bauart, unterschiedliche Baureihe, unterschiedlicher Einsatzzweck, etc.) sind. Die Applikationsanlagenbauteile weisen allerdings jeweils einen Transponder zum Speichern von Bauteildaten auf, insbesondere Bauteil-Identifikationsdaten, so dass die einzelnen Applikationsanlagenbauteile eindeutig identifizierbar sind und somit zweckmäßig voneinander unterscheidbar sind.

Das Applikationssystem umfasst ferner zumindest eine wie hierin offenbarte Lese- und/oder Schreibeinrichtung zum Lesen von Bauteildaten aus dem Transponder und/oder zum Beschreiben des Transponders mit Bauteildaten und ein wie hierin offenbartes Steuersystem.
Das Applikationssystem weist darüber hinaus zweckmäßig einen einen Roboter (z. B. ein mehrachsiger Gelenkarmroboter), der zweckmäßig zumindest ein Applikationsanlagenbauteil trägt und konfiguriert sein kann, den Transponder zum Lesen und/oder Beschreiben vor die Lese- und/oder Schreibeinrichtung zu positionieren.

Der Roboter kann bei bevorzugten Ausführungsbeispielen zumindest zwei in unterschiedliche Applikationsrichtungen orientierte Applikationsanlagenbauteile mit jeweils einem Transponder tragen. Der Roboter kann dann so konfiguriert sein, dass er sich vor der Lese- und/oder Schreibeinrichtung umorientiert, so dass die zumindest zwei Transponder von der Lese- und/oder Schreibeinrichtung auslesbar und/oder beschreibbar sind.
Das Auftragsmittel ist vorzugsweise ein Dichtmittel, ein Konservierungsmittel (z. B. Wachs), ein Klebematerial, Lack oder Kunststoff.
- Figur 1: zeigt eine Seitenansicht eines Applikationsanlagenbauteils gemäß einer Ausführungsform der Erfindung,
- Figur 2: zeigt eine Seitenansicht eines Applikationsanlagenbauteils gemäß einer anderen Ausführungsform der Erfindung,
- Figur 3: zeigt eine Draufsicht auf ein Applikationsanlagenbauteil gemäß einer anderen Ausführungsform der Erfindung,
- Figur 4: zeigt eine Draufsicht auf einen Teilabschnitt eines Applikationsanlagenbauteils gemäß einer wiederum anderen Ausführungsform der Erfindung und
- Figur 5: zeigt eine schematische Darstellung eines Applikationssystems gemäß einer Ausführungsform der Erfindung.
Die in den Figuren gezeigten Ausführungsformen stimmen teilweise überein, wobei ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

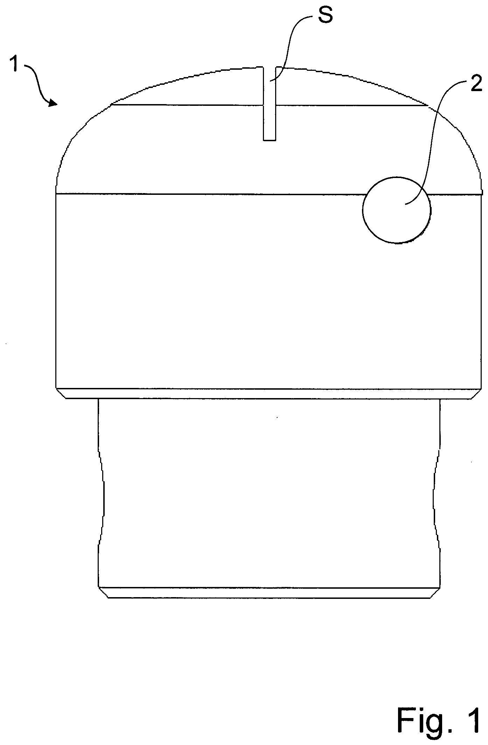

Figur 1 zeigt eine Seitenansicht eines Applikationsanlagenbauteils 1 gemäß einer Ausführungsform der Erfindung.

Das Applikationsanlagenbauteil 1 ist eine wechselbare Düse zur Herstellung von z. B. Nahtabdichtungen an Kraftfahrzeugkarosserien und ist üblicherweise an einen Applikationskopf einer Lanze montiert, die um ihre Längsachse drehbar ist.

Die Düse 1 ist eine Schlitzdüse (Flatstream-Düse) mit schlitzförmiger Düsenaustrittsöffnung S. Alternativ kann die Düse 1 z. B. als Runddüse mit runder Düsenaustrittsöffnung ausgeführt sein.

Die Düse 1 ist mit einem Transponder 2 ausgestattet, auf dem insbesondere zumindest Bauteil-Identifikationsdaten gespeichert und berührungslos auslesbar sind und der optional mit Bauteildaten berührungslos beschreibbar ist.

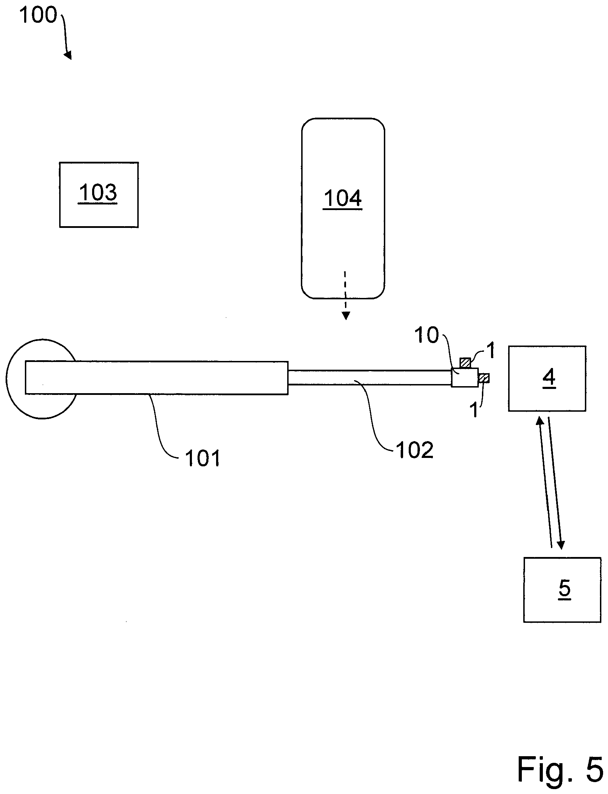

Der Transponder 2 ist in einer Aufnahmeöffnung der Düse 1 montiert, so dass die Kompaktheit der Düse 1 durch den Transponder 2 nicht beeinträchtigt wird. Der Transponder 2 wird unter Bezugnahme auf Figur 5 weiter unten näher beschrieben.

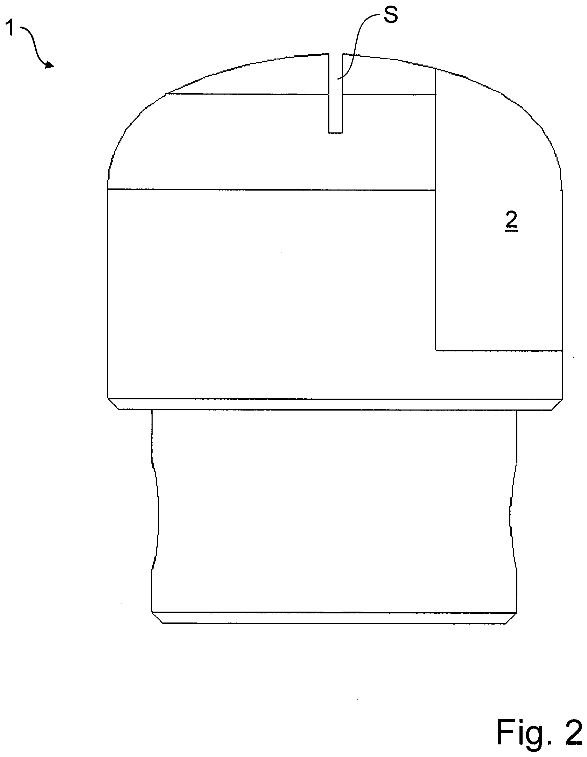

Figur 2 zeigt eine Düse 1 gemäß einer anderen Ausführungsform der Erfindung.

Eine Besonderheit der in Figur 2 gezeigten Düse 1 ist, dass sie einen gegenüber Figur 1 relativ großen Freiraum zur Integration des Transponders 2 aufweist. Vorteilhaft daran ist insbesondere, dass das Auslesen und/oder Beschreiben des Transponders 2 durch den meist metallischen Düsenkörper weniger behindert wird. So ist der Transponder 2 der Figur 2 axial und seitlich auslesbar und optional beschreibbar, während der Transponder 2 der Figur 1 nur seitlich auslesbar ist.

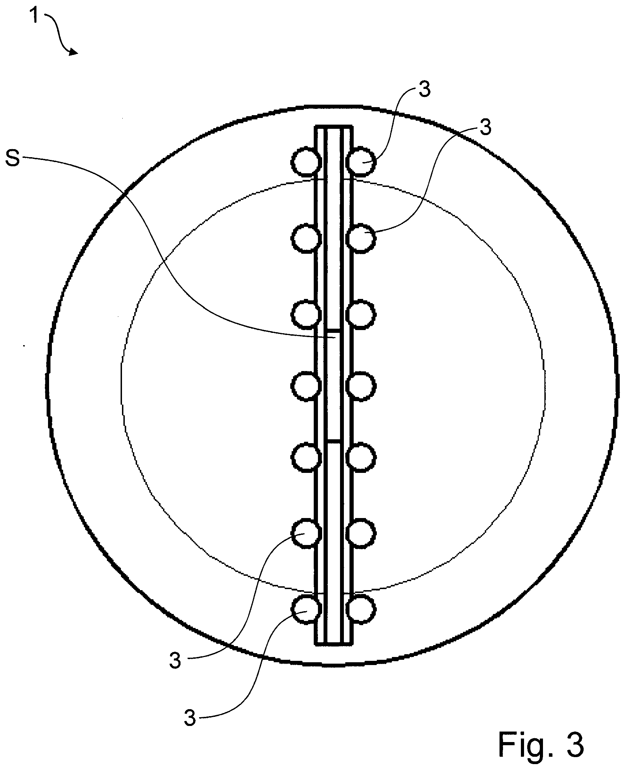

Figur 3 zeigt eine Draufsicht auf ein Applikationsanlagenbauteil 1 gemäß einer anderen Ausführungsform der Erfindung.

Das Applikationsanlagenbauteil 1 ist wiederum eine Schlitzdüse wie in den Figuren 1 und 2.

Die Düse 1 der Figur 3 umfasst allerdings eine mechanische Verschleißerkennungseinrichtung 3 zum Erfassen des Verschleißes der Düse 1, insbesondere der schlitzförmigen Düsenaustrittsöffnung S.

Die Verschleißerkennungseinrichtung 3 umfasst mehrere ausgesparte Verschleißmarken (zu Darstellungszwecken sind in Figur 3 nur vier mit dem Bezugszeichen 3 versehen) neben dem Verschleißabschnitt der Düse 1, also neben der schlitzförmigen Düsenaustrittsöffnung S.

Weitet sich die schlitzförmige Düsenaustrittsöffnung S durch Verschleiß so weit auf, dass sie zumindest eine der Verschleißmarken 3 erreicht, entsteht ein plötzlicher, überproportionaler Anstieg des Materialverbrauchs und/oder ein abfallender Applikationsdruck. Daraus kann festgestellt werden, dass die Düse 1 ein Verschleißmaß erreicht hat, um ausgewechselt zu werden.

Optional ist es möglich, die ausgesparten Verschleißmarken 3 mit Füllmaterial zu füllen. Das Füllmaterial entweicht, wenn es mit dem durch Verschleiß aufgeweiteten Verschleißabschnitt S in Kontakt kommt. Das Füllmaterial kann flüssig, pulverförmig oder pastös sein, ist aber vorzugsweise flüssiger Kunststoff. Darüber hinaus ist das Füllmaterial gegenüber der Farbe der Düse 1 und/oder gegenüber der Farbe des Auftragsmaterials andersfarbig, so dass nicht nur an der Düse 1 selbst das Erreichen eines maximal zulässigen Verschleißes erkennbar ist, sondern auch z. B. auf dem zu bearbeitenden Werkstück, also in der Regel einer Kraftfahrzeugkarosserie, und der Düse 1 selbst.

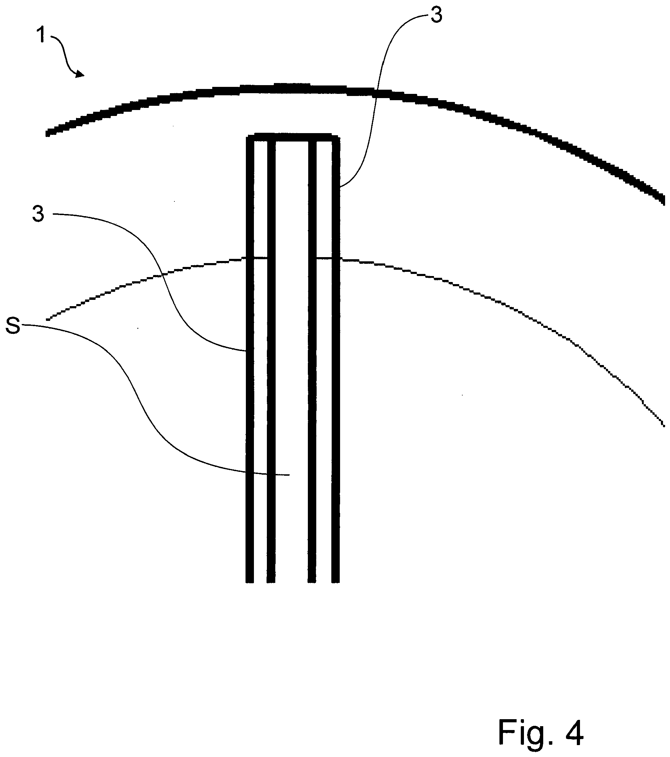

Figur 4 zeigt einen Teilabschnitt einer Düse 1 gemäß einer anderen Ausführungsform der Erfindung.

Eine Besonderheit der in Figur 4 gezeigten Düse 1 ist, dass sie neben der schlitzförmigen Düsenaustrittsöffnung S in den Düsenkörper erodierte, insbesondere lasergravierte linienförmige Verschleißmarken 3 aufweist, die zur visuellen oder optischen Prüfung des Verschleißes dienen. Die einzelnen Verschleißmarken 3 kennzeichnen unterschiedliche Verschleißstufen, so dass z. B. bei Erreichen der ersten Verschleißstufe noch kein unmittelbarer Wechselbedarf besteht, die Düse 1 aber als in naher Zukunft auswechselreif gekennzeichnet wird. Die nächste Verschleißstufe kann die Düse 1 dann als auswechselreif kennzeichnen.

Figur 5 zeigt eine schematische Darstellung eines Applikationssystems 100 gemäß einer Ausführungsform der Erfindung.

Das Applikationssystem 100 umfasst einen Roboter (Manipulator) 101, der eine um ihre Längsachse drehbare Lanze 102 trägt. An der Lanze 102 ist ein Applikationskopf 10 mit drei in unterschiedliche Applikationsrichtungen orientierten wechselbaren Düsen 1 montiert, von denen in Figur 5 nur zwei zu sehen sind.

Die Düsen 1 dienen z. B. zur Herstellung von Nahtabdichtungen auf Kraftfahrzeugkarosserien 104 und sind durch das Auftragsmittel und der damit einhergehenden Abrasivität Verschleiß unterworfen.

Die Düsen 1 sind mit Transpondern 2 ausgestattet, auf denen Düsen-Identifikationsdaten gespeichert sind, so dass die einzelnen Düsen 1 eindeutig identifizierbar und folglich voneinander unterscheidbar sind. Bei der in Figur 5 gezeigten Ausführungsform sind die Transponder 2 nur auslesbar und nicht beschreibbar.

Das Applikationssystem 100 umfasst ferner eine Leseeinrichtung 4 zum Lesen der Düsen-Identifikationsdaten aus den Transpondern 2 der einzelnen Düsen 1. Die Leseeinrichtung 4 dient zur Datenkommunikation mit einem Steuersystem 5 zum Steuern der Applikationsprozesse der Düsen 1 und des Roboters 101.

Der Roboter 101 ist bei dem betrachteten Ausführungsbeispiel so konfiguriert, dass er in vordefinierten Intervallen (z. B. vor und/oder nach einer Kraftfahrzeugkarosserie) den Applikationskopf 10 vor die Leseeinrichtung 4 bewegt und sich so umorientiert, dass die Düsen-Identifikationsdaten der einzelnen Transponder 2 ausgelesen und an das Steuersystem 5 übermittelt werden können.

In dem Steuersystem 5 kann daraufhin z. B. geprüft werden, ob für den anstehenden Applikationsprozess die richtigen Düsen 1 an dem Applikationskopf 10 montiert sind.

In dem Steuersystem 5 können außerdem den einzelnen Düsen 1, die wegen der Düsen-Identifikationsdaten eindeutig identifizierbar sind, zusätzliche Düsen-Daten zugeordnet werden, z. B. der Startzeitpunkt und der Endzeitpunkt der Applikationsprozesse der einzelnen Düsen 1, die Betriebsdauer der einzelnen Düsen 1, die mittels der einzelnen Düsen 1 applizierte Menge (z. B. Durchsatz) an Auftragsmittels, etc.. Aus den letztgenannten Düsen-Daten können dann quasi indirekt Rückschlüsse auf den Verschleiß der einzelnen Düsen 1 gezogen werden. Falls eine bestimmte Düse 1 z. B. eine vordefinierte Auftragsmittelmenge appliziert hat oder eine vordefinierte Betriebsdauer betrieben wurde, kann das Steuersystem 5 eine Warnmeldung ausgegeben und/oder einen vorzugsweise automatischen Düsen-Wechselvorgang einleiten.

Die Transponder 2 führen somit auf zweierlei Weise zu einer Erhöhung der Prozess- und Produktsicherheit. Einerseits, weil wechselbare Applikationsanlagenbauteile 1 eindeutig identifizierbar und somit in Bezug auf den anstehenden Bearbeitungsvorgang auf Richtigkeit prüfbar sind. Andererseits, weil eindeutig identifizierbaren Applikationsanlagenbauteilen Bauteildaten konkret zuordbar sind, aus denen z. B. Rückschlüsse auf den Verschleiß und die Historie derselben gezogen werden können.

Das Applikationssystem 100 kann ferner eine optionale Düsenwechselstation 103 mit mehreren Düsen 1 aufweisen. Der Roboter 101 kann hierbei so konfiguriert sein, dass er den Applikationskopf 10 zum automatischen Wechseln der Düsen 1 zu der Düsenwechselstation 103 führt, wo der Düsenwechsel automatisch stattfindet. Der Düsenwechsel der Düsen D1 erfolgt also nicht manuell, sondern automatisch über den Roboter 101 und die Düsenwechselstation 103. Falls das Applikationssystem 100 eine Düsenwechselstation 103 aufweist, kann die Leseeinrichtung 4 an der Düsenwechselstation 103 oder zumindest benachbart dazu montiert sein.

Zu erwähnen ist, dass die Leseeinrichtung 4 auch als Lese- und Schreibeinrichtung ausgeführt sein kann, um die einzelnen Transponder 2 mit Bauteildaten zu beschreiben.

Zu erwähnen ist außerdem, dass das Applikationsanlagenbauteil zwar vorzugsweise eine Düse 1 ist, aber auch andere Applikationsorgane, z. B. Glockenteller, und andere in Applikationsanlagen übliche, Verschleiß ausgesetzte Bauteile umfassen kann.

Wie oben erwähnt, kann die Lese- und/oder Schreibeinrichtung 4 bei dem beschriebenen Ausführungsbeispiel an oder in der Nähe einer Düsenwechselstation 103 angeordnet sein, also in der Regel ortsfest an einer Stelle der Applikationsanlage, die der Applikationsroboter 101 ohnehin regelmäßig anfahren muss, so dass das vorzugsweise automatische Lesen bzw. Schreiben der Bauteildaten ohne besonderen Bewegungs- und Zeitaufwand durchgeführt werden kann. Eine andere derartige Stelle der Applikationsanlage wäre beispielsweise auch eine Reinigungsstation zum regelmäßigen automatischen Reinigen der Applikationsorgane.

Es sind aber auch Ausführungsbeispiele der Erfindung möglich, bei denen die Lese- und/oder Schreibeinrichtung nicht ortsfest angeordnet sein muss, sondern bewegt werden kann, um vor dem Transponder eines Applikationsroboters positioniert zu werden.

Hierfür wäre es beispielsweise denkbar, die Lese- und/oder Schreibeinrichtung mit Hilfe eines eigenen Handhabungsroboters oder in Sonderfällen auch manuell zu bewegen.

Statt eines eigenen Handhabungsroboters für die Lese- und/oder Schreibeinrichtung kann es in der Praxis und insbesondere in dem typischen Fall mehrerer Applikationsroboter in einer Applikationsanlage aber auch einfacher und zweckmäßiger sein, jeweilige Lese- und/oder Schreibeinrichtungen an mindestens einem oder mehreren oder allen Applikationsrobotern z. B. einer typischen Beschichtungsanlage für die Serienbeschichtung von Kraftfahrzeugkarossen selbst anzuordnen. Jeder von mehreren Applikationsrobotern kann dann durch Annäherung seines Transponders an die Lese- und/oder Schreibeinrichtung eines anderen Applikationsroboters oder durch Annäherung seiner Lese- und/oder Schreibeinrichtung an den Transponder eines anderen Applikationsroboters den gewünschten Lese- oder Schreibvorgang in die Wege leiten. Die Applikationsroboter können sich bei diesem Beispiel also gegenseitig mit den gewünschten Bauteildaten versorgen, wobei es beispielsweise auch möglich wäre, dass ein gegebener Applikationsroboter die Bauteildaten eines zweiten Roboters liest und seine eigenen Daten einem dritten Roboter übergibt. Die Datenübergabe kann zweckmäßig jeweils dann erfolgen, wenn sich die betreffenden Roboter während des Applikationsbetriebs ohnehin programmgemäß einander nähern. Die Lese- bzw. Schreibvorgänge und die Roboterbewegungen können in allen genannten Fällen ebenfalls von dem erwähnten Steuersystem gesteuert werden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche, unabhängig von den in Bezug genommenen Merkmalen und Ansprüchen.

### Bezugszeichenliste:

- 1: Applikationsanlagenbauteil (Bauteil für eine Applikationsanlage)
- 2: Transponder
- 3: Verschleißerkennungseinrichtung / Verschleißerkennungsmarke(n)
- 4: Lese- und/oder Schreibeinrichtung
- 5: Steuersystem
- S: Verschleißabschnitt
- 10: Applikationskopf
- 100: Applikationssystem
- 101: Manipulator (Roboter)
- 102: Drehbare Lanze
- 103: Düsenwechselstation
- 104: Werkstück, insbesondere Kraftfahrzeugkarosserie und/oder Anbauteil hierfür

## Patentansprüche

1. Applikationsanlagenbauteil (1), das zur Anordnung an einem Roboter (101) eines Applikationssystems und zum Applizieren eines Auftragsmittels auf Kraftfahrzeugkarosserien und/oder deren Anbauteile ausgebildet ist, insbesondere wechselbare Düse oder wechselbarer Glockenteller,
**gekennzeichnet durch** einen Transponder (2) zum Speichern von Bauteildaten zur Identifikation des Applikationsanlagenbauteils (1) und von Bauteildaten, aus denen ein Verschleiß des Applikationsanlagenbauteils (1) ermittelbar ist, wobei die Bauteildaten auslesbar sind,
und eine Verschleißerkennungseinrichtung (3) zum Erkennen eines Verschleißes des Applikationsanlagenbauteils (1), die zumindest eine Verschleißmarke neben einem Verschleißabschnitt (S) des Applikationsanlagenbauteils (1) aufweist.

2. Applikationsanlagenbauteil (1) nach Anspruch 1, wobei der Transponder (2) mit Bauteildaten beschreibbar oder nur auslesbar ist, aber nicht beschreibbar ist.

3. Applikationsanlagenbauteil (1) nach einem der vorhergehenden Ansprüche, wobei die Bauteildaten zumindest Bauteil-Authentifikationsdaten zur Authentifikation des Applikationsanlagenbauteils (1) umfassen, so dass das Applikationsanlagenbauteil (1) authentifizierbar ist.

4. Applikationsanlagenbauteil (1) nach einem der vorhergehenden Ansprüche, wobei das Applikationsanlagenbauteil (1) mit einer separaten Lese- und/oder Schreibeinrichtung (4) zur Verfügung gestellt ist und die Lese- und/oder Schreibeinrichtung zum Lesen von Bauteildaten aus dem Transponder (2) und/oder zum Beschreiben des Transponders (2) mit Bauteildaten dient.

5. Applikationsanlagenbauteil (1) nach Anspruch 4, wobei das Applikationsanlagenbauteil (1) mit einem separaten Steuersystem (5) zur Verfügung gestellt ist und das Steuersystem (5) mit der Lese- und/oder Schreibeinrichtung (4) verbindbar ist, so dass Bauteildaten aus dem Transponder (2) an das Steuersystem (5) übermittelbar sind und/oder Bauteildaten aus dem Steuersystem (5) an den Transponder (2) übermittelbar sind.

6. Applikationsanlagenbauteil (1) nach einem der vorhergehenden Ansprüche, wobei die Bauteildaten zumindest eine der folgenden zusätzlichen Bauteildaten umfassen:
- den Startzeitpunkt und/oder den Endzeitpunkt eines Betriebsvorgangs des Applikationsanlagenbauteils (1),
- die Betriebsdauer des Applikationsanlagenbauteils (1),
- die mittels des Applikationsanlagenbauteils (1) verarbeitete Menge an Auftragsmittel zum Applizieren auf ein Werkstück.

7. Applikationsanlagenbauteil (1) nach Anspruch 5, wobei das Steuersystem (5) ausgeführt ist, Bauteildaten einem eindeutig identifizierbaren Applikationsanlagenbauteil (1) zuzuordnen und/oder einem eindeutig identifizierbaren Applikationsanlagenbauteil (1) zugeordnete Bauteildaten mit vordefinierten Daten zu vergleichen.

8. Applikationsanlagenbauteil (1) nach Anspruch 5, wobei das Steuersystem (5) ausgeführt ist, eine Warnmeldung zu erzeugen und/oder einen Applikationsanlagenbauteil-Wechselvorgang zu veranlassen, wenn mittels der Bauteildaten auf einen übermäßigen Verschleiß des Applikationsanlagenbauteils (1) geschlossen wird,
und/oder wobei das Steuersystem (5) ausgeführt ist, eine Warnmeldung zu erzeugen und/oder einen Bearbeitungsprozess zu stoppen, wenn mittels der Bauteildaten auf ein falsches Applikationsanlagenbauteil geschlossen wird.

9. Applikationsanlagenbauteil (1) nach einem der vorhergehenden Ansprüche, wobei der Transponder (2) ein RFID-Transponder ist.

10. Applikationsanlagenbauteil (1) nach einem der vorhergehenden Ansprüche, wobei der Transponder (2) an oder in das Applikationsanlagenbauteil (1) montiert ist,
und/oder wobei das Applikationsanlagenbauteil (1) einen Freiraum aufweist und der Transponder (2) so in den Freiraum integriert ist, dass er nicht von der Außenfläche des Applikationsanlagenbauteils (1) absteht und/oder bündig zur Außenfläche des Applikationsanlagenbauteils (1) angeordnet ist.

11. Applikationsanlagenbauteil (1) nach einem der vorhergehenden Ansprüche, **dadurch gekennzeichnet, dass** die Verschleißerkennungseinrichtung (3) zumindest eine ausgesparte Verschleißmarke neben einem Verschleißabschnitt (S) des Applikationsanlagenbauteils (1) aufweist, so dass eine plötzliche Betriebsänderung erfolgt, wenn der durch Verschleiß aufgeweitete Verschleißabschnitt (S) mit der ausgesparten Verschleißmarke in Kontakt kommt.

12. Applikationsanlagenbauteil (1) nach einem der vorhergehenden Ansprüche, **dadurch gekennzeichnet, dass** die Verschleißerkennungseinrichtung (3) zumindest eine mit Füllmaterial gefüllte Verschleißmarke neben einem Verschleißabschnitt (S) des Applikationsanlagenbauteils (1) aufweist und das Füllmaterial entweicht, wenn es mit dem durch Verschleiß aufgeweiteten Verschleißabschnitt (S) in Kontakt kommt.

13. Applikationsanlagenbauteil (1) nach Anspruch 12, **dadurch gekennzeichnet, dass** das Füllmaterial gegenüber dem Applikationsanlagenbauteil (1) und/oder dem mittels des Applikationsanalgenbauteils (1) auszugebenden Auftragsmaterial andersfarbig ist,
und/oder dass das Füllmaterial flüssig, pulverförmig oder pastös ist.

14. Applikationsanlagenbauteil (1) nach einem der vorhergehenden Ansprüche, **dadurch gekennzeichnet, dass** die zumindest eine Verschleißmarke (3) in den Körper des Applikationsanlagenbauteils (1) erodiert, gebohrt, geschnitten oder gelasert ist.

15. Applikationsanlagenbauteil (1) nach einem der vorhergehenden Ansprüche, **dadurch gekennzeichnet, dass**
- das Applikationsanlagenbauteil (1) eine wechselbare Düse zum Applizieren eines Auftragsmittels auf Kraftfahrzeugkarosserien und/oder deren Anbauteile, ist, und/oder
- der Verschleißabschnitt (S) eine schlitzförmige Düsenöffnung zum Applizieren eines Auftragsmittels auf Kraftfahrzeugkarosserien und/oder deren Anbauteile, ist.

16. Betriebsverfahren für ein Applikationsanlagenbauteil (1) gemäß einem der vorhergehenden Ansprüche, mit dem Schritt des Auslesens von Bauteildaten aus einem Transponder (2) des Applikationsanlagenbauteils (1), wobei die Bauteildaten zumindest Bauteil-Identifikationsdaten zur Identifikation des Applikationsanlagenbauteils (1) umfassen, so dass das Applikationsanlagenbauteil (1) eindeutig identifizierbar ist, **dadurch gekennzeichnet,**
- **dass** der Transponder (2) von einem das Applikationsanlagenbauteil (1) tragenden Roboter (101) zum Lesen und/oder Schreiben von Bauteildaten vor eine Lese- und/oder Schreibeinrichtung (4) positioniert wird, und/oder
- **dass** eine Lese- und/oder Schreibeinrichtung zum Lesen und/oder Schreiben von Bauteildaten von einem Manipulator oder Roboter vor dem Transponder positioniert wird.

17. Applikationssystem (100) zum Applizieren eines Auftragsmittels auf Kraftfahrzeugkarosserien und/oder deren Anbauteile,
mit zumindest einem Applikationsanlagenbauteil (1), das einen Transponder (2) zum Speichern auslesbarer Bauteildaten aufweist, insbesondere mit einem Applikationsanlagenbauteil (1) nach Anspruch 1,
**gekennzeichnet durch** eine Lese- und/oder Schreibeinrichtung (4) zum Lesen von Bauteildaten aus dem Transponder (2) und/oder zum Beschreiben des Transponders (2),
ein mit der Lese- und/oder Schreibeinrichtung verbindbares Steuersystem (5),
und einen Roboter (101), der das zumindest eine Applikationsanlagenbauteil (1) mit dem Transponder (2) trägt,
wobei der Roboter (101) konfiguriert ist, den Transponder (2) zum Lesen und/oder Beschreiben vor die Lese- und/oder Schreibeinrichtung (4) zu positionieren,
oder mindestens ein weiterer Roboter vorgesehen ist, der konfiguriert ist, die Lese- und/oder Schreibeinrichtung zum Lesen und/oder Beschreiben vor dem Transponder zu positionieren.

18. Applikationssystem nach Anspruch 17 mit mindestens einem weiteren Roboter, der konfiguriert ist, die Lese- und/oder Schreibeinrichtung vor dem Transponder zu positionieren, **dadurch gekennzeichnet, dass** der mindestens eine weitere Roboter ebenfalls zumindest ein Applikationsanlagenbauteil mit Transponder trägt.

19. Applikationssystem nach Anspruch 18, **dadurch gekennzeichnet, dass** an den mindestens zwei Robotern jeweils eine Lese- und/oder Schreibeinrichtung angeordnet ist und die Roboter zum Lesen und/oder Schreiben von Bauteildaten des Transponders eines jeweils anderen Roboters steuerbar sind.

20. Applikationssystem nach einem der Ansprüche 17 bis 19, wobei der Roboter (101) zumindest zwei Applikationsanlagenbauteile (1) mit jeweils einem Transponder(2) trägt und konfiguriert ist, sich vor der Lese- und/oder Schreibeinrichtung (4) umzuorientieren, so dass die zumindest zwei Transponder (2) von der Lese- und/oder Schreibeinrichtung (4) auslesbar und/oder beschreibbar sind.

## Claims

1. Application system component (1) that is designed for being mounted on a robot (101) of an application system and for applying an application agent on motor vehicle bodies and/or their attachments, in particular changeable nozzle or changeable bell cup,
**characterised by** a transponder (2) for storing component data for identification of the application system component (1) and component data from which wear of the application system component (1) can be determined, wherein the component data are readable,
and a wear detection means (3) for detecting wear of the application system component (1) comprising at least one wear mark next to a wear portion (S) of the application system component (1).

2. Application system component (1) according to claim 1, wherein the transponder (2) is writable with component data, or is only readable, but not writable.

3. Application system component (1) according to any one of the preceding claims, wherein the component data comprise at least component authentication data for authentication of the application system component (1) so that the application system component (1) can be authenticated.

4. Application system component (1) according to any one of the preceding claims, wherein the application system component (1) is made available with a separate reading and/or writing device (4) and the reading and/or writing device serves to read component data from the transponder (2) and/or write component data to the transponder (2).

5. Application system component (1) according to claim 4, wherein the application system component (1) is made available with a separate control system (5) and the control system (5) can be connected to the reading and/or writing device (4) so that component data can be transmitted from the transponder (2) to the control system (5) and/or component data can be transmitted from the control system (5) to the transponder (2).

6. Application system component (1) according to any one of the preceding claims, wherein the component data comprise at least one of the following additional component data:
- the starting time and/or the end time of an operating process of the application system component (1),
- the period of operation of the application system component (1),
- the quantity of application agent processed by means of the application system component (1) for application on a workpiece.

7. Application system component (1) according to claim 5, wherein the control system (5) is embodied to assign component data to a clearly identifiable application system component (1), and/or to compare component data assigned to a clearly identifiable application system component (1) with predefined data.

8. Application system component (1) according to claim 5, wherein the control system (5) is embodied to generate a warning message and/or bring about an application system component changeover process if excessive wear of the application system component (1) is concluded by means of the component data,
and/or wherein the control system (5) is embodied to generate a warning message and/or stop a processing process if an incorrect application system component is concluded by means of the component data.

9. Application system component (1) according to any one of the preceding claims, wherein the transponder (2) is an RFID transponder.

10. Application system component (1) according to any one of the preceding claims, wherein the transponder (2) is mounted on or in the application system component (1),
and/or wherein the application system component (1) has a clearance and the transponder (2) is integrated into the clearance so that it does not project from the outer surface of the application system component (1) and/or is arranged flush with the outer surface of the application system component (1).

11. Application system component (1) according to any one of the preceding claims, **characterised in that** the wear detection means (3) comprises at least one recessed wear mark next to a wear portion (S) of the application system component (1) so that a sudden change in operation takes place if the wear portion (S) widened by wear comes into contact with the recessed wear mark.

12. Application system component (1) according to any one of the preceding claims, **characterised in that** the wear detection means (3) comprises at least one wear mark filled with filling material next to a wear portion (S) of the application system component (1) and the filling material escapes if it comes into contact with the wear portion (S) widened by wear.

13. Application system component (1) according to claim 12, **characterised in that** the filling material is of a different colour to the application system component (1) and/or the application material to be emitted by means of the application system component (1),
and/or the filling material is liquid, in powder form or paste-like.

14. Application system component (1) according to any one of the preceding claims, **characterised in that** the at least one wear mark (3) is eroded, bored, cut or lasered into the body of the application system component (1).

15. Application system component (1) according to any one of the preceding claims, **characterised in that**
- the application system component (1) is a changeable nozzle for application of an application agent on motor vehicle bodies and/or their attachments, and/or
- the wear portion (S) is a slot-shaped nozzle opening for application of an application agent on motor vehicle bodies and/or their attachments.

16. Operating method for an application system component (1) according to any one of the preceding claims, with the step of reading component data from a transponder (2) of the application system component (1), wherein the component data comprise at least component identification data for identification of the application system component (1) so that the application system component (1) can be clearly identified,
**characterised in that**
- the transponder (2) is positioned by a robot (101) which bears the application system component (1) for reading and/or writing component data in front of a reading and/or writing device (4), and/or
- a reading and/or writing device for reading and/or writing component data is positioned by a manipulator or robot in front of the transponder.

17. Application system (100) for application of an application agent on motor vehicle bodies and/or their attachments, with at least one application system component (1) having a transponder (2) for storing readable component data, particularly with an application system component (1) according to claim 1,
**characterised by** a reading and/or writing device (4) for reading component data from the transponder (2) and/or for writing to the transponder (2),
a control system (5) which can be connected to the reading and/or writing device,
and a robot (101) carrying the at least one application system component (1) with the transponder (2),
the robot (101) being configured to position the transponder for reading and/or writing in front of the reading and/or writing device (4),
or at least one further robot is provided which is configured to position the reading and/or writing device for reading and/or writing in front of the transponder.

18. Application system according to claim 17, with at least one further robot which is configured to position the reading and/or writing device in front of the transponder, **characterised in that** the at least one further robot also bears at least one application system component with transponder.

19. Application system according to claim 18, **characterised in that** a reading and/or writing device is arranged on each of the at least two robots and the robots can be controlled for reading and/or writing of component data of the transponder of an in each case different robot.

20. Application system according to any one of claims 17 to 19, wherein the robot (101) bears at least two application system components (1) with in each case a transponder (2) and is configured to reorientate itself in front of the reading and/or writing device (4) so that the at least two transponders (2) are readable and/or writable by the reading and/or writing device (4).

## Revendications

1. Outil d'application (1), qui est réalisé pour l'agencement au niveau d'un robot (101) d'un système d'application et pour l'application d'un agent d'application sur des carrosseries de véhicule automobile et/ou leurs pièces rapportées, en particulier buse remplaçable ou plaque en forme de cloche remplaçable,
**caractérisé par** un transpondeur (2) pour la mémorisation de données d'outil pour l'identification de l'outil d'application (1) et de données d'outil, à partir desquelles une usure de l'outil d'application (1) peut être déterminée, dans lequel les données d'outil peuvent être lues,
et un indicateur d'usure (3) pour la détection d'une usure de l'outil d'application (1), qui présente au moins une marque d'usure à côté d'une section d'usure (S) de l'outil d'application (1).

2. Outil d'application (1) selon la revendication 1, dans lequel des données d'outil peuvent être écrites ou seulement lues, mais pas écrites, sur le transpondeur (2).

3. Outil d'application (1) selon l'une quelconque des revendications précédentes, dans lequel les données d'outil comprennent au moins des données d'authentification d'outil pour l'authentification de l'outil d'application (1), de sorte que l'outil d'application (1) puisse être authentifié.

4. Outil d'application (1) selon l'une quelconque des revendications précédentes, dans lequel l'outil d'application (1) est mis à disposition avec un dispositif de lecture et/ou d'écriture (4) séparé et le dispositif de lecture et/ou d'écriture sert à la lecture de données d'outil du transpondeur (2) et/ou à l'écriture de données d'outil sur le transpondeur (2).

5. Outil d'application (1) selon la revendication 4, dans lequel l'outil d'application (1) est mis à disposition avec un système de commande (5) séparé et le système de commande (5) peut être relié au dispositif de lecture et/ou d'écriture (4), de sorte que des données d'outil du transpondeur (2) puissent être transmises au système de commande (5) et/ou des données d'outil du système de commande (5) puissent être transmises au transpondeur (2).

6. Outil d'application (1) selon l'une quelconque des revendications précédentes, dans lequel les données d'outil comprennent au moins une des données d'outil supplémentaires suivantes :
- l'heure de début et/ou l'heure de fin d'une opération de fonctionnement de l'outil d'application (1),
- la durée de fonctionnement de l'outil d'application (1),
- la quantité d'agent d'application traitée au moyen de l'outil d'application (1) pour l'application sur une pièce.

7. Outil d'application (1) selon la revendication 5, dans lequel le système de commande (5) est réalisé pour associer des données d'outil à un outil d'application (1) clairement identifiable et/ou pour comparer des données d'outil associées à un outil d'application (1) clairement identifiable avec des données prédéfinies.

8. Outil d'application (1) selon la revendication 5, dans lequel le système de commande (5) est réalisé pour générer un avertissement et/ou provoquer une opération de changement d'outil d'application, lorsqu'il est conclu à une usure excessive de l'outil d'application (1) au moyen des données d'outil,
et/ou dans lequel le système de commande (5) est réalisé pour générer un avertissement et/ou arrêter un processus de traitement lorsqu'il est conclu à un mauvais outil d'application au moyen des données d'outil.

9. Outil d'application (1) selon l'une quelconque des revendications précédentes, dans lequel le transpondeur (2) est un transpondeur RFID.

10. Outil d'application (1) selon l'une quelconque des revendications précédentes, dans lequel le transpondeur (2) est monté au niveau de ou dans l'outil d'application (1),
et/ou dans lequel l'outil d'application (1) présente un espace libre et le transpondeur (2) est intégré dans l'espace libre de sorte qu'il n'est pas en saillie de la surface extérieure de l'outil d'application (1) et/ou est agencé à fleur de la surface extérieure de l'outil d'application (1).

11. Outil d'application (1) selon l'une quelconque des revendications précédentes, **caractérisé en ce que** l'indicateur d'usure (3) présente au moins une marque d'usure évidée à côté d'une section d'usure (S) de l'outil d'application (1), de sorte qu'un changement soudain de fonctionnement a lieu, lorsque la section d'usure (S) élargie par l'usure vient en contact avec la marque d'usure évidée.

12. Outil d'application (1) selon l'une quelconque des revendications précédentes, **caractérisé en ce que** l'indicateur d'usure (3) présente au moins une marque d'usure remplie de matériau de remplissage à côté d'une section d'usure (S) de l'outil d'application (1) et le matériau de remplissage s'échappe, lorsqu'il vient en contact avec la section d'usure (S) élargie par l'usure.

13. Outil d'application (1) selon la revendication 12, **caractérisé en ce que** le matériau de remplissage a une autre couleur que l'outil d'application (1) et/ou l'agent d'application à émettre au moyen de l'outil d'application (1),
et/ou que le matériau de remplissage est fluide, pulvérulent ou pâteux.

14. Outil d'application (1) selon l'une quelconque des revendications précédentes, **caractérisé en ce que** l'au moins une marque d'usure (3) est érodée, percée, coupée ou réalisée au laser dans le corps de l'outil d'application (1).

15. Outil d'application (1) selon l'une quelconque des revendications précédentes, **caractérisé en ce que**
- l'outil d'application (1) est une buse remplaçable pour l'application d'un agent d'application sur des carrosseries de véhicule automobile et/ou leurs pièces rapportées, et/ou
- la section d'usure (S) est une ouverture de buse en forme de fente pour l'application d'un agent d'application sur des carrosseries de véhicule automobile et/ou leurs pièces rapportées.

16. Procédé de fonctionnement pour un outil d'application (1) selon l'une quelconque des revendications précédentes, avec l'étape de lecture de données d'outil d'un transpondeur (2) de l'outil d'application (1), dans lequel les données d'outil comprennent au moins des données d'identification d'outil pour l'identification de l'outil d'application (1), de sorte que l'outil d'application (1) soit clairement identifiable, **caractérisé en ce**
- **que** le transpondeur (2) est positionné par un robot (101) portant l'outil d'application (1) pour la lecture et/ou l'écriture de données d'outil en amont d'un dispositif de lecture et/ou d'écriture (4), et/ou
- **qu'**un dispositif de lecture et/ou d'écriture est positionné pour la lecture et/ou l'écriture de données d'outil par un manipulateur ou robot en amont du transpondeur.

17. Système d'application (100) pour l'application d'un agent d'application sur des carrosseries de véhicule automobile et/ou leurs pièces rapportées,
avec au moins un outil d'application (1), qui présente un transpondeur (2) pour la mémorisation de données d'outil pouvant être lues, en particulier avec un outil d'application (1) selon la revendication 1,
**caractérisé par** un dispositif de lecture et/ou d'écriture (4) pour la lecture de données d'outil du transpondeur (2) et/ou pour l'écriture du transpondeur (2),
un système de commande (5) pouvant être relié au dispositif de lecture et/ou d'écriture,
et un robot (101), qui porte l'au moins un outil d'application (1) avec le transpondeur (2),
dans lequel le robot (101) est configuré pour positionner le transpondeur (2) pour la lecture et/ou l'écriture en amont du dispositif de lecture et/ou d'écriture (4),
ou au moins un autre robot est prévu, qui est configuré pour positionner le dispositif de lecture et/ou d'écriture pour la lecture et/ou l'écriture en amont du transpondeur.

18. Système d'application selon la revendication 17 avec au moins un autre robot, qui est configuré pour positionner le dispositif de lecture et/ou d'écriture en amont du transpondeur, **caractérisé en ce que** l'au moins un autre robot porte également au moins un outil d'application avec transpondeur.

19. Système d'application selon la revendication 18, **caractérisé en ce que** respectivement un dispositif de lecture et/ou d'écriture est agencé au niveau des au moins deux robots et les robots peuvent être commandés pour la lecture et/ou l'écriture de données d'outil du transpondeur d'un autre robot, respectivement.

20. Système d'application selon l'une quelconque des revendications 17 à 19, dans lequel le robot (101) porte au moins deux outils d'application (1) avec respectivement un transpondeur (2) et est configuré pour se réorienter en amont du dispositif de lecture et/ou d'écriture (4) de sorte que le dispositif de lecture et/ou d'écriture (4) puisse lire et/ou écrire sur les au moins deux transpondeurs (2).
